(19) **Europäisches Patentamt / European Patent Office / Office européen des brevets**

(11) **EP 4 044 048 A1**

(12) **EUROPEAN PATENT APPLICATION**
published in accordance with Art. 153(4) EPC

(43) Date of publication:
**17.08.2022 Bulletin 2022/33**

(21) Application number: **21790349.1**

(22) Date of filing: **02.06.2021**

(51) International Patent Classification (IPC):
**G06F 16/9535** (2019.01)

(86) International application number:
**PCT/CN2021/097905**

(87) International publication number:
**WO 2022/134479 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 CN 202011573267**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **JI, Ran**
  **Beijing 100085 (CN)**
• **ZHANG, Hao**
  **Beijing 100085 (CN)**

(74) Representative: **Wynne-Jones IP Limited**
**Southgate House**
**Southgate Street**
**Gloucester**
**Gloucestershire GL1 1UB (GB)**

(54) **ROUTE RECOMMENDATION METHOD AND APPARATUS, ELECTRONIC DEVICE, AND STORAGE MEDIUM**

(57) The present disclosure provides a route recommendation method and apparatus, an electronic device, and a storage medium, which relate to the field of intelligent recommendation. The specific implementation includes: acquiring i-th scenic area information input for a target itinerary, wherein i is a positive integer; updating a scenic area list of the target itinerary based on the i-th scenic area information, and determining an estimated tour duration based on the scenic area list; and determining a recommended route of the target itinerary based on the scenic area list, in a case where a difference between a planned itinerary duration of the target itinerary and the estimated tour duration is less than a preset threshold. According to the solution of the present disclosure, a high-quality recommended route meeting individual needs of a user can be obtained.

acquiring i-th scenic area information input for a target itinerary, wherein i is a positive integer — S11

updating a scenic area list of the target itinerary based on the i-th scenic area information, and determining an estimated tour duration based on the scenic area list — S12

determining a recommended route of the target itinerary based on the scenic area list, in a case where a difference between a planned itinerary duration of the target itinerary and the estimated tour duration is less than a preset threshold — S13

**FIG. 1**

EP 4 044 048 A1

**Description**

**TECHNICAL FIELD**

The present disclosure relates to the field of data processing, and in particular, to the field of intelligent recommendation.

**BACKGROUND**

With the vigorous development of tourism, people's requirements for tourism quality are also rapidly increasing. Compared with group tours or self-guided tours with the help of public transportation, self-driving tours are more free in terms of travel schedule and scenic spot selection, effectively improving the flexibility of the itinerary and the sense of experience. Therefore, the self-driving tour has gradually become one of the popular tour modes.

The quality of self-driving tours is often the core of tourist satisfaction. Currently, users generally search for routes recommended by other users through the Internet, and choose routes that are relatively more in line with their own needs from them.

**SUMMARY**

A route recommendation method and apparatus, an electronic device, and a storage medium are provided according to embodiments of the present disclosure.

According to one aspect of the present disclosure, there is provided a route recommendation method, which includes:

acquiring i-th scenic area information input for a target itinerary, wherein i is a positive integer;
updating a scenic area list of the target itinerary based on the i-th scenic area information, and determining an estimated tour duration based on the scenic area list; and
determining a recommended route of the target itinerary based on the scenic area list, in a case where a difference between a planned itinerary duration of the target itinerary and the estimated tour duration is less than a preset threshold.

According to another aspect of the present disclosure, there is provided a route recommendation apparatus, which includes:

an information acquisition module configured for acquiring i-th scenic area information input for a target itinerary, wherein i is a positive integer;
a duration determination module configured for updating a scenic area list of the target itinerary based on the i-th scenic area information, and determining an estimated tour duration based on the scenic area list; and
a route determination module configured for determining a recommended route of the target itinerary based on the scenic area list, in a case where a difference between a planned itinerary duration of the target itinerary and the estimated tour duration is less than a preset threshold.

According to another aspect of the present disclosure, there is provided an electronic device, which includes:

at least one processor; and
a memory communicatively connected with the at least one processor, wherein
the memory stores instructions executable by the at least one processor, and the instructions, when executed by the at least one processor, enable the at least one processor to perform the method by provided the embodiment of the present disclosure.

According to another aspect of the present disclosure, there is provided a non-transitory computer-readable storage medium storing computer instructions, wherein the computer instructions, when executed by a computer, cause the computer to perform the method by provided the embodiment of the present disclosure.

According to another aspect of the present disclosure, there is provided a computer program product including a computer program, wherein the computer program, when executed by a processor, implements the method in the embodiment of the present disclosure.

According to the solution of the present disclosure, the scenic area list can be updated based on the input scenic area information, and the recommended route can be determined in a case where it is determined based on the scenic area list that the difference between the estimated tour duration and the planned itinerary duration is small. Therefore, the scenic area list can be determined according to the user input, and the number of scenic areas in the itinerary can be set reasonably, to obtain the high-quality recommended route that meets the individual needs of users.

It should be understood that the content described in this section is neither intended to limit the key or important features of the embodiments of the present disclosure, nor intended to limit the scope of the present disclosure. Other features of the present disclosure will be readily understood through the following description.

**BRIEF DESCRIPTION OF THE DRAWINGS**

The drawings are used to better understand the solution and do not constitute a limitation to the present disclosure, wherein:

FIG. 1 is a schematic diagram of a route recommendation method provided by an embodiment of the present disclosure;
FIG. 2 is a schematic diagram of a route recommendation method provided by another embodiment of the present disclosure;
FIG. 3 is a schematic diagram of an application example of a route recommendation method according to the present disclosure;
FIG. 4 is a schematic diagram of a route recommendation apparatus provided by an embodiment of the present disclosure;
FIG. 5 is a schematic diagram of a route recommendation apparatus provided by another embodiment of the present disclosure; and
FIG. 6 is a block diagram of an electronic device configured for implementing a route recommendation method according to an embodiment of the present disclosure.

**DETAILED DESCRIPTION**

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

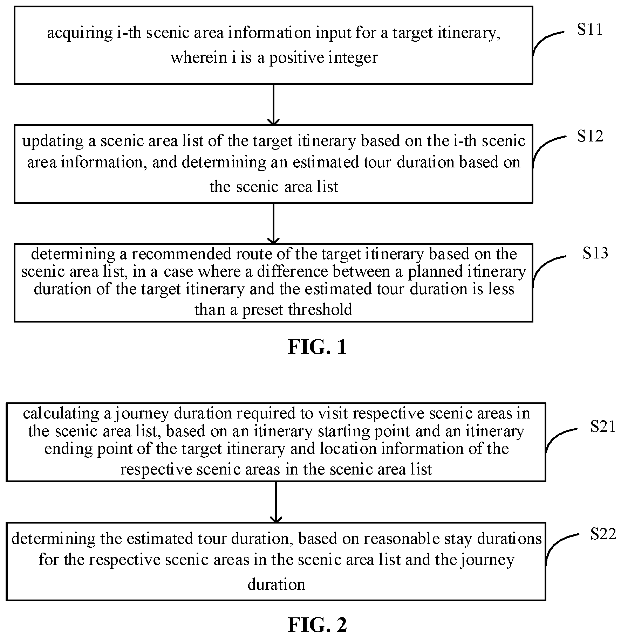

FIG. 1 shows a schematic diagram of a route recommendation method provided by an embodiment of the present disclosure. As shown in FIG. 1, the method includes:

S11, acquiring i-th scenic area information input for a target itinerary, wherein i is a positive integer;

S12, updating a scenic area list of the target itinerary based on the i-th scenic area information, and determining an estimated tour duration based on the scenic area list; and

S13, determining a recommended route of the target itinerary based on the scenic area list, in a case where a difference between a planned itinerary duration of the target itinerary and the estimated tour duration is less than a preset threshold.

In the embodiment of the present disclosure, the scenic area is an area including at least one scenic spot, which can provide a user with a relatively concentrated and rich landscape, such as the Forbidden City scenic area, Zhangjiajie scenic area, and so on. Herein, the scenic spots can refer to relatively independent and complete landscape units, such as the Taihe Palace scenic spot in the Forbidden City scenic area, and the Tianmen Mountain scenic spot in the Zhangjiajie scenic area.

The target itinerary may be an itinerary to which a route recommended for the user belongs. As an example, the user can input relevant information of the target itinerary, and an electronic device that executes the above method can determine the recommended route of the target itinerary based on the acquired information input for the target itinerary. Herein, the relevant information of the target itinerary may include scenic area information, an itinerary starting point, an itinerary ending point, an itinerary starting time, an itinerary ending time, the number of days of the itinerary, etc. Herein, the planned itinerary duration can be determined based on the itinerary starting time and the itinerary ending time.

In the embodiment of the present disclosure, the user can input scenic area information for the target itinerary, and the electronic device can obtain the scenic area list according to the scenic area information input by the user. In this way, the recommended route can be determined according to the user's individual needs. Herein, the scenic area information may include information such as a name, a code and phonetic initials of a scenic area.

Illustratively, every time the user inputs scenic area information, the electronic device adds the corresponding information such as a name or a code of a scenic area to the scenic area list, to update the scenic area list once, and determines the estimated tour duration based on the scenic area list. That is, after i-th scenic area information is obtained, the scenic area list may include the i-th scenic area information and previously obtained X scenic area information. Herein, X is an integer, for example, X can be zero.

In a case where the difference between the planned itinerary duration and the estimated tour duration is less than the preset threshold, the user can be prompted to stop inputting scenic area information, and the recommended route of the target itinerary is determined based on the current scenic area list. As an example, in a case where the difference between the planned itinerary duration and the estimated tour duration is less than the preset threshold, prompt information for stopping input of scenic area information is output, and in a case where it is determined that the input of scenic area information is stopped, for example, the user inputs an instruction to confirm the stop, the recommended route of the target itinerary is determined based on the scenic area list. Based on this, the recommended route can be determined in a case where the number of scenic areas in the target itinerary is not fully saturated, so that the number of scenic areas in the target itinerary is reasonable and the itinerary can be organized in an orderly manner.

In a case where the difference between the planned itinerary duration and the estimated tour duration is greater than or equal to the preset threshold, (i+1)-th scenic area information input for the target itinerary can be acquired. Herein, the user can also be prompted to continue to input scenic area information, so as to continue to update the scenic area list. As an example, the above method may further include: in a case where the difference between the planned itinerary duration of the target itinerary and the estimated tour duration is greater than or equal to the preset threshold, outputting prompt information for continuing to input scenic area information, and obtaining the (i+1)-th scenic area information input for the target itinerary. Based on this, it is possible to set as many scenic areas as possible within the planned itinerary duration of the target itinerary, so that the user can visit and experience as much as possible.

It can be seen that based on the method of the embodiment of the present disclosure, the scenic area list can be updated based on the input scenic area information, and the recommended route can be determined in a case where it is determined based on the scenic area list that the difference between the estimated tour duration and the planned itinerary duration is small. Therefore, it is conducive to rationally setting the number of scenic areas in the itinerary and designing high-quality routes that meet the individual needs of users, so that inadequate visiting of the users due to leaving too much spare time, or missing some scenic areas in the itinerary due to excessively tight itinerary design can be avoided.

Herein, the estimated tour duration can be calculated based on relevant information of the target itinerary and relevant information of respective scenic areas in the scenic area list. As an example, as shown in FIG. 2, in the above S12, i.e., the determining the estimated tour duration based on the scenic area list, includes:

S21, calculating a journey duration required to visit respective scenic areas in the scenic area list, based on an itinerary starting point and an itinerary ending point of the target itinerary and location information of the respective scenic areas in the scenic area list; and

S22, determining the estimated tour duration, based on reasonable stay durations for the respective scenic areas in the scenic area list and the journey duration.

For example, the itinerary starting point of the target itinerary is $P_s$, the itinerary ending point of the target itinerary is $P_e$, there are (n+1) scenic areas in the scenic area list, among which, respective scenic areas are numbered starting from 0, and the j-th scenic area is $P_j$. The journey duration $T_{route}$ can be calculated based on the following formula:

$$T_{route} = T_{P_s-P_0} + T_{P_n-P_e} + \sum_{j=1}^{n} T_{P_{j-1}-P_j} \quad (1),$$

where, $T_{P_s-P_o}$ is a duration required from the itinerary starting point $P_s$ to the 0-th scenic area $P_0$ in the scenic area list, and $T_{P_n-P_e}$ is a duration required from the last scenic area $P_n$ in the scenic area list to the itinerary ending point $P_e$, and $T_{P_{j-1}-P_j}$ is a duration required from the (j-1)-th scenic area to the j-th scenic area in the scenic area list. According to the itinerary starting point $P_s$, the itinerary ending point $P_e$, and the location information of the respective scenic areas in the scenic area list, the respective durations in the formula (1) can be calculated.

Optionally, it is also possible to combine the itinerary starting time $t_s$ of the target itinerary to calculate the respective durations in the formula (1). For example, a future travel time estimation function in a map application is invoked according to the itinerary starting time $t_s$ of the target itinerary, and the journey durations required to visit the respective scenic areas in the scenic area list are calculated by using the future travel time estimation function, based on the itinerary starting point $P_s$, the itinerary ending point $P_e$, and the location information of the respective scenic areas in the scenic area list. The calculation result has high accuracy.

Illustratively, reasonable stay durations for the respective scenic areas in the scenic area list can be obtained based on historical data mining. Specifically, stay durations of a plurality of users in a scenic area can be calculated according to times of the plurality of users entering and leaving the scenic area in historical data. The stay durations of the plurality of users in the scenic area are analyzed statistically to obtain stay duration distribution information. In practical applications, the distribution of stay durations is generally Gaussian. Based on the stay duration distribution information, the reasonable stay duration for the scenic area is determined. For example, a median or expected value of the stay durations is taken as the reasonable stay duration in the scenic area. For another example, a stay duration distribution interval $[T_{low}, T_{high}]$ of X users with the longest stay durations is taken as the reasonable stay duration in the scenic area, where X is a positive integer, and X can be obtained based on a preset ratio, for example, X is 70%, 80%, or the like of the total number of users.

Based on the reasonable stay durations for the respective scenic areas, the total stay duration $T_{tour}$ can be calculated according to the following formula:

$$T_{tour} = \sum_{j=0}^{n} T_j, T_j \in [T_{low}, T_{high}] \quad (2),$$

where $T_j$ is the reasonable stay duration for the (j+1)-th scenic area, which is any value in the stay duration distribution interval $[T_{low}, T_{high}]$.

Based on the reasonable stay duration and the journey duration, the estimated tour duration T can be determined according to the following formula:

$$\mathrm{T} = T_{route} + T_{tour} \quad (3).$$

It can be seen that in the above example, the itinerary starting point, the itinerary ending point, and the location information of the respective scenic areas are used as the basis for calculation, and the journey duration, the stay duration and other time factors in the itinerary are fully considered. Therefore, the accurate estimated tour duration can be calculated, which is beneficial to accurately and reasonably set the number of scenic areas, so as to improve the experience of the itinerary.

It should be noted that in a case where the reasonable stay duration for a scenic area is an interval, the estimated tour duration can be obtained based on the minimum value of the reasonable stay duration, or it can be obtained based on the maximum value of the reasonable stay duration. Alternatively, the estimated tour duration can also correspond to a certain duration interval. In a case of calculating the difference between the planned itinerary duration and the estimated tour duration, the calculation can be based on the maximum value of the duration interval, to avoid excessive tension in the itinerary.

As an exemplary implementation, the above S21, i.e., the calculating the journey duration required to visit the respective scenic areas in the scenic area list, based on the itinerary starting point and the itinerary ending point of the target itinerary and the location information of the respective scenic areas in the scenic area list, may include:

determining N tour orders based on the scenic area list, wherein N is a positive integer;
calculating N journey durations corresponding to the N tour orders respectively, based on the itinerary starting point and the itinerary ending point of the target itinerary and the location information of the respective scenic areas in the scenic area list; and
determining a minimum of the N journey durations as the journey duration required to visit the respective scenic areas in the scenic area list.

Illustratively, it is possible to traverse all arrangement modes of the respective scenic areas in the scenic area list to obtain N tour orders. Then, based on each of the N tour orders, the journey duration is calculated according to the formula (1), to obtain N journey durations. The minimum value of the N journey durations is taken as the journey duration required to visit the respective scenic areas in the scenic area list.

According to the above-mentioned embodiments, the journey duration of the itinerary can be minimized, thereby improving the experience of the itinerary.

Optionally, in the above S13, the determining the recommended route of the target itinerary based on the scenic area list includes:

determining a tour order corresponding to the minimum of the N journey durations obtained based on the scenic area list, as a tour order of the respective scenic areas in the recommended route of the target itinerary.

That is, the tour order corresponding to the minimum journey duration is determined as the tour order of the respective scenic areas in the recommended route of the target itinerary. Based on this, the recommended route can be optimized to the greatest extent.

It can be seen that, according to the foregoing embodiments, the electronic device can obtain the globally optimal scenic area list and the scenic area tour order under the following constraint:

$$argmin(T_{route}) \ \ s.t. \ \ T_{duraion} \geq T_{route} + T_{tour},$$

wherein, $argmin(T_{route})$ represents minimizing the journey duration $T_{route}$; and s.t. (subject to) represents that the following inequality needs to be satisfied, that is, the constraint is $T_{duraion} \geq T_{route} + T_{tour}$, where $T_{duraion}$ is the planned itinerary duration, $T_{route}$ is the journey duration required to visit the respective scenic areas in the scenic area list, and $T_{tour}$ is the total stay duration.

In some embodiments of the present disclosure, not only the scenic area list and the scenic area tour order can be optimized to meet the individual needs of users and provide the users with a sufficient but not stressful itinerary experience, but also optimized routes within the scenic areas can be provided for the respective scenic areas. Specifically, in the above S13, the determining the recommended route of the target itinerary based on the scenic area list may include:

determining an estimated stay duration for a j-th scenic area in the scenic area list, based on the planned itinerary duration of the target itinerary and reasonable stay durations for respective scenic areas in the scenic area list; and selecting a route meeting the estimated stay duration from a set of high-quality routes corresponding to the j-th scenic area, as a recommended route for the j-th scenic area.

Illustratively, the ratio of the estimated stay durations for the respective scenic areas can be determined based on the reasonable stay durations for the respective scenic areas. According to the ratio and the difference between the planned itinerary duration of the target itinerary and the journey duration, the estimated stay durations for the respective scenic areas are determined.

For example, in a case where the planned itinerary duration is 7h (hours) and the estimated tour duration is 5h, among which the journey duration is 1h and the total stay duration is 4h, it is determined based on the scenic area list that the recommended route for the target itinerary includes two scenic areas with reasonable stay durations of 2.5h and 1.5h, the ratio of the estimated stay durations for the two scenic areas should be 5:3. According to the difference of 6h between the planned itinerary duration and the journey duration and this ratio, the estimated stay durations for the two scenic areas can be calculated as 3.75h and 2.25h, respectively.

In the embodiment of the present disclosure, a set of high-quality routes for the respective scenic areas can be pre-configured. The set of high-quality routes can be obtained based on historical data. For example, routes of a plurality of users in the scenic area are selected from the historical data and added to the set of high-quality routes. Herein, the selection basis may be the users' popularity values or the routes' popularity values, and a popularity value can be determined according to the number of times a user or a route is viewed and commented, and the like.

In practical applications, the duration interval corresponding to the set of high-quality routes can be divided into a plurality of sub-intervals. For example, in a case where the durations for routes of a plurality of users in a scenic area is between 1h and 2h, the duration interval [1h, 2h] can be divided into sub-intervals [1h, 1.5h] and [1.5h, 2h]. In a case where the estimated stay duration for the j-th scenic area in the scenic area list is 1.75h, the sub-interval [1.5h, 2h] is a sub-interval meeting the estimated stay duration, and a route with a stay duration in the sub-interval [1.5h, 2h] is determined as the recommended route for the j-th scenic area.

According to the foregoing embodiment, on the basis of determining the scenic area list, the recommended routes in the scenic areas can also be automatically determined for the respective scenic areas in the scenic area list, so that the users do not need to spend a lot of time and energy, and the recommendation efficiency is high.

An embodiment of the present disclosure also provides an exemplary way of determining high-quality routes corresponding to respective scenic areas. Specifically, the above-mentioned route recommendation method may further include:

determining a core scenic spot of the j-th scenic area from scenic spots passed by M historical routes for the j-th scenic area, wherein M is a positive integer; and

selecting L routes from the M historical routes based on the core scenic spot of the j-th scenic area, and obtaining the set of high-quality routes corresponding to the j-th scenic area based on the L routes, wherein L is a positive integer less than or equal to M.

Illustratively, statistics can be performed on the scenic spots passed by the M historical routes, and Y scenic spots that have been passed the most times are determined as core scenic spots. Here, Y is a positive integer.

Illustratively, the M historical routes may be aggregated first, to obtain a set of historical routes to be selected. For example, routes with exactly the same scenic spots covered in the M historical routes $POI_{SM}(i = 0,1, ..., M)$ are considered as the same route, and the number of occurrences of different routes in $POI_{SM}$ is counted. Routes with the number of occurrences less than a threshold of the number of times, such as 3 times or 4 times, are eliminated, and the set of historical routes to be selected is obtained based on the remaining routes.

Illustratively, L routes can be selected according to the number of core scenic spots covered by respective historical routes in the set of routes to be selected. For example, the number of core scenic spots in a scenic area is 5; in a case where the number of core scenic spots covered by a historical route is greater than 3, the route can be selected.

According to the above implementation, the set of high-quality routes in the scenic area is obtained based on the core scenic spots, which is beneficial to recommend to users routes in the scenic area with a high coverage rate of the core scenic spots and a high degree of experience.

The embodiment of the present disclosure also provides a way to determine scenic spots passed by respective historical routes. Specifically, the above-mentioned route recommendation method may further include:

clustering user positioning points corresponding to a k-th historical route among the M historical routes, to obtain P positioning point clusters, wherein k and P are both positive integers; and

determining P scenic spots associated with the P positioning point clusters based on location information of respective scenic spots in the j-th scenic area, and determining the P scenic spots as scenic spots passed by the k-th historical route.

Illustratively, clustering may be performed according to spatial distances of user positioning points in each historical route, to obtain a plurality of positioning point clusters, and a positioning point cluster with a low positioning point density may be eliminated to obtain the remaining P positioning point clusters. Then, according to distances between a center of each positioning point cluster in the P positioning point clusters and respective scenic spots in a scenic area, each positioning point cluster is bound to the nearest scenic spot, to obtain scenic spots passed by the historical route.

By means of clustering, it is possible to accurately determine scenic spots passed by a historical route, thereby improving the accuracy of mining core scenic spots, and helping to recommend the most suitable route within a scenic area to users.

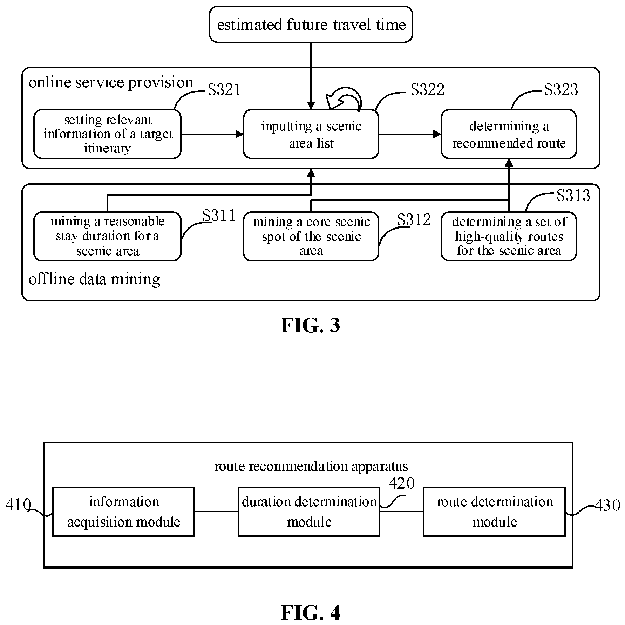

FIG. 3 shows a schematic diagram of an application example of a route recommendation method of the present disclosure. As shown in FIG. 3, the route recommendation method of the present disclosure includes online service provision, offline data mining and estimated future travel time.

Herein, the offline data mining includes:

S311, mining a reasonable stay duration for a scenic area;

S312, mining a core scenic spot of the scenic area; and

S313, determining a set of high-quality routes for the scenic area.

Information obtained based on the offline data mining will be used to provide online services.

The online service provision includes:

S321, setting relevant information of a target itinerary. Herein, the relevant information includes a starting time, an ending time, an itinerary starting point, an itinerary ending point, and the like. Based on the starting time and the ending time, the planned itinerary duration can be calculated.

S322, inputting a scenic area list. Herein, a way of accessing an input module in a polling mode is adopted, and an estimated tour duration is calculated after each input, and it is determined whether to continue an input until the estimated tour duration is close to the planned itinerary duration. Herein, the estimated tour duration can be calculated based on the reasonable stay duration for the scenic area and in combined with the estimated future travel time.

S323, determining a recommended route. Herein, the recommended route can be determined according to the core scenic spots of the scenic area and the set of high-quality routes.

According to the method of the embodiment of the present disclosure, the scenic area list can be updated based on the input scenic area information, and the recommended route can be determined in a case where it is determined based on the scenic area list that the difference between the estimated tour duration and the planned itinerary duration is small. Therefore, the scenic area list can be determined according to user input, and the number of scenic areas in the itinerary can be set reasonably, to obtain high-quality recommended routes that meet individual needs of users.

As an implementation of the above methods, the present disclosure also provides a route recommendation apparatus. FIG. 4 shows a schematic diagram of a route recommendation apparatus in an embodiment of the present disclosure. As shown in FIG. 4, the apparatus includes:

an information acquisition module 410 configured for acquiring i-th scenic area information input for a target itinerary, wherein i is a positive integer;

a duration determination module 420 configured for updating a scenic area list of the target itinerary based on the i-th scenic area information, and determining an estimated tour duration based on the scenic area list; and

a route determination module 430 configured for determining a recommended route of the target itinerary based on the scenic area list, in a case where a difference between a planned itinerary duration of the target itinerary and the estimated tour duration is less than a preset threshold.

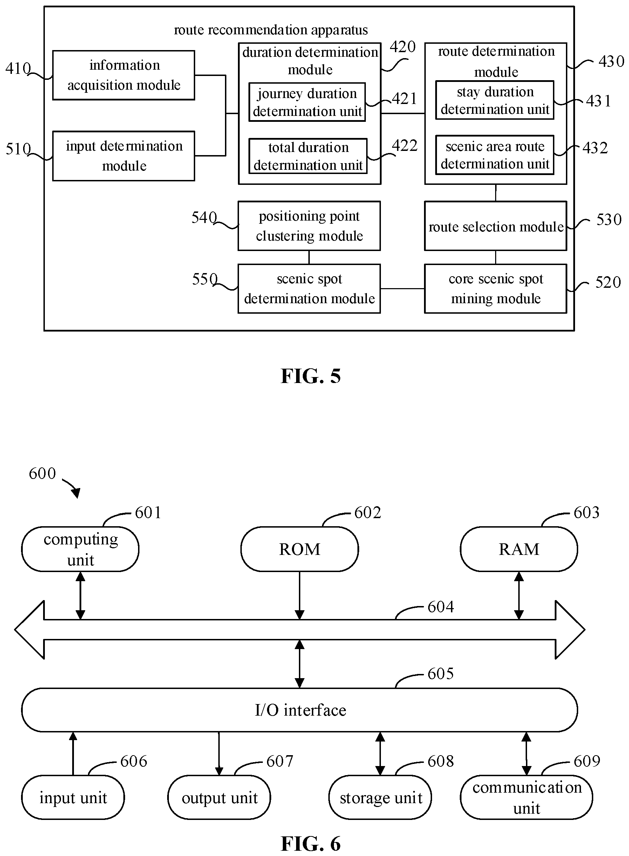

Illustratively, as shown in FIG. 5, the apparatus further includes:
an input determination module 510 configured for acquiring (i+1)-th scenic area information input for the target itinerary, in a case where the difference between the planned itinerary duration of the target itinerary and the estimated tour duration is greater than or equal to the preset threshold.
Illustratively, as shown in FIG. 5, the duration determining module 420 may include:

a journey duration determination unit 421 configured for calculating a journey duration required to visit respective scenic areas in the scenic area list, based on an itinerary starting point and an itinerary ending point of the target itinerary and location information of the respective scenic areas in the scenic area list; and

a total duration determination unit 422 configured for determining the estimated tour duration, based on reasonable stay durations for the respective scenic areas in the scenic area list and the journey duration.

Illustratively, the journey duration determination unit 421 is configured for:

determining N tour orders based on the scenic area list, wherein N is a positive integer;

calculating N journey durations corresponding to the N tour orders respectively, based on the itinerary starting point and the itinerary ending point of the target itinerary and the location information of the respective scenic areas in the scenic area list; and

determining a minimum of the N journey durations as the journey duration required to visit the respective scenic areas in the scenic area list.

Illustratively, the route determination module 430 is configured for:
determining a tour order corresponding to the minimum of the N journey durations obtained based on the scenic area list, as a tour order of the respective scenic areas in the recommended route of the target itinerary.
Illustratively, as shown in FIG. 5, the route determination module 430 may include:

a stay duration determination unit 431 configured for determining an estimated stay duration for a j-th scenic area in the scenic area list, based on the planned itinerary duration of the target itinerary and reasonable stay durations for respective scenic areas in the scenic area list; and
a scenic area route determination unit 432 configured for selecting a route meeting the estimated stay duration from a set of high-quality routes corresponding to the j-th scenic area, as a recommended route for the j-th scenic area.

Illustratively, as shown in FIG. 5, the apparatus further includes:

a core scenic spot mining module 520 configured for determining a core scenic spot of the j-th scenic area from scenic spots passed by M historical routes for the j-th scenic area, wherein M is a positive integer; and
a route selection module 530 configured for selecting L routes from the M historical routes based on the core scenic spot of the j-th scenic area, and obtaining the set of high-quality routes corresponding to the j-th scenic area based on the L routes, wherein L is a positive integer less than or equal to M.

Illustratively, as shown in FIG. 5, the apparatus further includes:

a positioning point clustering module 540 configured for clustering user positioning points corresponding to a k-th historical route among the M historical routes, to obtain P positioning point clusters, wherein k and P are both positive integers; and

a scenic spot determination module 550 configured for determining P scenic spots associated with the P positioning point clusters based on location information of respective scenic spots in the j-th scenic area, and determining the P scenic spots as scenic spots passed by the k-th historical route.

The apparatus provided in the embodiments of the present disclosure can implement the method provided in the embodiments of the present disclosure, and has corresponding beneficial effects.

According to embodiments of the present disclosure, the present disclosure also provides an electronic device a readable storage medium and a computer program product.

FIG. 6 shows a schematic diagram of an example electronic device 600 configured for implementing the embodiment of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 6, the electronic device 600 includes a computing unit 601 that may perform various suitable actions and processes in accordance with computer programs stored in a read only memory (ROM) 602 or computer programs loaded from a storage unit 608 into a random access memory (RAM) 603. In the RAM 603, various programs and data required for the operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the electronic device 600 to exchange information/data with other devices over a computer network, such as the Internet, and/or various telecommunications networks.

The computing unit 601 may be various general purpose and/or special purpose processing assemblies having processing and computing capabilities. Some examples of the computing unit 601 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 601 performs various methods and processes described above, such as the route recommendation method. For example, in some embodiments, the route recommendation method may be implemented as computer software programs that are physically contained in a machine-readable medium, such as the storage unit 608. In some embodiments, some or all of the computer programs may be loaded into and/or installed on the electronic device 600 via the ROM 602 and/or the communication unit 609. In a case where the computer programs are loaded into the RAM 603 and executed by the computing unit 601, one or more of steps of the route recommendation method may be performed. Alternatively, in other embodiments, the computing unit 601 may be configured to perform the route recommendation method in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

**Claims**

1. A route recommendation method, comprising:

   acquiring i-th scenic area information input for a target itinerary, wherein i is a positive integer;
   updating a scenic area list of the target itinerary based on the i-th scenic area information, and determining an estimated tour duration based on the scenic area list; and
   determining a recommended route of the target itinerary based on the scenic area list, in a case where a difference between a planned itinerary duration of the target itinerary and the estimated tour duration is less than a preset threshold.

2. The method of claim 1, further comprising:
   acquiring (i+1)-th scenic area information input for the target itinerary, in a case where the difference between the planned itinerary duration of the target itinerary and the estimated tour duration is greater than or equal to the preset threshold.

3. The method of claim 1 or 2, wherein the determining the estimated tour duration based on the scenic area list, comprises:

calculating a journey duration required to visit respective scenic areas in the scenic area list, based on an itinerary starting point and an itinerary ending point of the target itinerary and location information of the respective scenic areas in the scenic area list; and
determining the estimated tour duration, based on reasonable stay durations for the respective scenic areas in the scenic area list and the journey duration.

4. The method of claim 3, wherein the calculating the journey duration required to visit the respective scenic areas in the scenic area list, based on the itinerary starting point and the itinerary ending point of the target itinerary and the location information of the respective scenic areas in the scenic area list, comprises:

determining N tour orders based on the scenic area list, wherein N is a positive integer;
calculating N journey durations corresponding to the N tour orders respectively, based on the itinerary starting point and the itinerary ending point of the target itinerary and the location information of the respective scenic areas in the scenic area list; and
determining a minimum of the N journey durations as the journey duration required to visit the respective scenic areas in the scenic area list.

5. The method of claim 4, wherein the determining the recommended route of the target itinerary based on the scenic area list, comprises:
determining a tour order corresponding to the minimum of the N journey durations obtained based on the scenic area list, as a tour order of the respective scenic areas in the recommended route of the target itinerary.

6. The method of claim 1 or 2, wherein the determining the recommended route of the target itinerary based on the scenic area list, comprises:

determining an estimated stay duration for a j-th scenic area in the scenic area list, based on the planned itinerary duration of the target itinerary and reasonable stay durations for respective scenic areas in the scenic area list; and
selecting a route meeting the estimated stay duration from a set of high-quality routes corresponding to the j-th scenic area, as a recommended route for the j-th scenic area.

7. The method of claim 6, further comprising:

determining a core scenic spot of the j-th scenic area from scenic spots passed by M historical routes for the j-th scenic area, wherein M is a positive integer; and
selecting L routes from the M historical routes based on the core scenic spot of the j-th scenic area, and obtaining the set of high-quality routes corresponding to the j-th scenic area based on the L routes, wherein L is a positive integer less than or equal to M.

8. The method of claim 7, further comprising:

clustering user positioning points corresponding to a k-th historical route among the M historical routes, to obtain P positioning point clusters, wherein k and P are both positive integers; and
determining P scenic spots associated with the P positioning point clusters based on location information of respective scenic spots in the j-th scenic area, and determining the P scenic spots as scenic spots passed by the k-th historical route.

9. A route recommendation apparatus, comprising:

an information acquisition module configured for acquiring i-th scenic area information input for a target itinerary, wherein i is a positive integer;
a duration determination module configured for updating a scenic area list of the target itinerary based on the i-th scenic area information, and determining an estimated tour duration based on the scenic area list; and
a route determination module configured for acquiring (i+1)-th scenic area information input for the target itinerary, in a case where a difference between a planned itinerary duration of the target itinerary and the estimated tour duration is less than a preset threshold.

10. The apparatus of claim 9, further comprising:
an input determination module configured for determining to continue to input scenic area information for the target itinerary, in a case where the difference between the planned itinerary duration of the target itinerary and the estimated tour duration is greater than or equal to the preset threshold.

11. The apparatus of claim 9 or 10, wherein the duration determination module comprises:

a journey duration determination unit configured for calculating a journey duration required to visit respective scenic areas in the scenic area list, based on an itinerary starting point and an itinerary ending point of the target itinerary and location information of the respective scenic areas in the scenic area list; and
a total duration determination unit configured for determining the estimated tour duration, based on reasonable stay durations for the respective scenic areas in the scenic area list and the journey duration.

12. The apparatus of claim 11, wherein the journey duration determination unit is configured for:

determining N tour orders based on the scenic area list, wherein N is a positive integer;
calculating N journey durations corresponding to the N tour orders respectively, based on the itinerary starting point and the itinerary ending point of the target itinerary and the location information of the respective scenic areas in the scenic area list; and
determining a minimum of the N journey durations as the journey duration required to visit the respective scenic areas in the scenic area list.

13. The apparatus of claim 12, wherein the route determination module is configured for:
determining a tour order corresponding to the minimum of the N journey durations obtained based on the scenic area list, as a tour order of the respective scenic areas in a recommended route of the target itinerary.

14. The apparatus of claim 9 or 10, wherein the route determination module comprises:

a stay duration determination unit configured for determining an estimated stay duration for a j-th scenic area in the scenic area list, based on the planned itinerary duration of the target itinerary and reasonable stay durations for respective scenic areas in the scenic area list; and
a scenic area route determination unit configured for selecting a route meeting the estimated stay duration from a set of high-quality routes corresponding to the j-th scenic area, as a recommended route for the j-th scenic area.

15. The apparatus of claim 14, further comprising:

a core scenic spot mining module configured for determining a core scenic spot of the j-th scenic area from scenic spots passed by M historical routes for the j-th scenic area, wherein M is a positive integer; and
a route selection module configured for selecting L routes from the M historical routes based on the core scenic spot of the j-th scenic area, and obtaining the set of high-quality routes corresponding to the j-th scenic area based on the L routes, wherein L is a positive integer less than or equal to M.

16. The apparatus of claim 15, further comprising:

a positioning point clustering module configured for clustering user positioning points corresponding to a k-th historical route among the M historical routes, to obtain P positioning point clusters, wherein k and P are both positive integers; and
a scenic spot determination module configured for determining P scenic spots associated with the P positioning point clusters based on location information of respective scenic spots in the j-th scenic area, and determining the P scenic spots as scenic spots passed by the k-th historical route.

17. An electronic device, comprising:

at least one processor; and
a memory communicatively connected with the at least one processor, wherein
the memory stores instructions executable by the at least one processor, and the instructions, when executed by the at least one processor, enable the at least one processor to perform the method of any one of claims 1 to 8.

18. A non-transitory computer-readable storage medium storing computer instructions, wherein the computer instructions, when executed by a computer, cause the computer to perform the method of any one of claims 1 to 8.

19. A computer program product comprising a computer program, wherein the computer program, when executed by a processor, implements the method of any one of claims 1 to 8.

acquiring i-th scenic area information input for a target itinerary, wherein i is a positive integer — S11

updating a scenic area list of the target itinerary based on the i-th scenic area information, and determining an estimated tour duration based on the scenic area list — S12

determining a recommended route of the target itinerary based on the scenic area list, in a case where a difference between a planned itinerary duration of the target itinerary and the estimated tour duration is less than a preset threshold — S13

**FIG. 1**

calculating a journey duration required to visit respective scenic areas in the scenic area list, based on an itinerary starting point and an itinerary ending point of the target itinerary and location information of the respective scenic areas in the scenic area list — S21

determining the estimated tour duration, based on reasonable stay durations for the respective scenic areas in the scenic area list and the journey duration — S22

**FIG. 2**

estimated future travel time

online service provision — S321

S322

S323

setting relevant information of a target itinerary

inputting a scenic area list

determining a recommended route

mining a reasonable stay duration for a scenic area

S311

mining a core scenic spot of the scenic area

S312

determining a set of high-quality routes for the scenic area

S313

offline data mining

**FIG. 3**

route recommendation apparatus

420

410

information acquisition module

duration determination module

route determination module

430

**FIG. 4**

route recommendation apparatus

410 — information acquisition module

510 — input determination module

420 — duration determination module

421 — journey duration determination unit

422 — total duration determination unit

430 — route determination module

431 — stay duration determination unit

432 — scenic area route determination unit

540 — positioning point clustering module

550 — scenic spot determination module

530 — route selection module

520 — core scenic spot mining module

**FIG. 5**

600

601 — computing unit

602 — ROM

603 — RAM

604

605 — I/O interface

606 — input unit

607 — output unit

608 — storage unit

609 — communication unit

**FIG. 6**

## INTERNATIONAL SEARCH REPORT

| | International application No. |
|---|---|
| | **PCT/CN2021/097905** |

**A. CLASSIFICATION OF SUBJECT MATTER**

G06F 16/9535(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, ISI: 路线, 推荐, 景区, 信息, 更新, 列表, 预计, 游览, 时长, 行程, 阈值, route, recommendation, attracion, information, update, list, estimate, trip, duration, travel, threshold

**C. DOCUMENTS CONSIDERED TO BE RELEVANT**

| Category* | Citation of document, with indication, where appropriate, of the relevant passages | Relevant to claim No. |
|---|---|---|
| PX | CN 112559891 A (BEIJING BAIDU NETCOM SCIENCE AND TECHNOLOGY CO., LTD.) 26 March 2021 (2021-03-26) claims 1-19, description, paragraphs [0004]-[0019] | 1-19 |
| X | CN 106886837 A (SHANGHAI CTRIP COMMERCE CO., LTD.) 23 June 2017 (2017-06-23) description, paragraphs [0038]-[0079] and figures 1-2 | 1-19 |
| A | CN 109165786 A (SHENZHEN SPRINGWOODS HOLDING CO., LTD.) 08 January 2019 (2019-01-08) entire document | 1-19 |
| A | CN 111768035 A (BEIJING SCIENCE AND TECHNOLOGY CO., THREE FAST ONLINE) 13 October 2020 (2020-10-13) entire document | 1-19 |
| A | US 2018094943 A1 (MICROSOFT TECHNOLOGY LICENSING, L.L.C.) 05 April 2018 (2018-04-05) entire document | 1-19 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2021** | **26 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/097905**

| Patent document cited in search report | | | Publication date (day/month/year) | Patent family member(s) | | | Publication date (day/month/year) |
|---|---|---|---|---|---|---|---|
| CN | 112559891 | A | 26 March 2021 | None | | | |
| CN | 106886837 | A | 23 June 2017 | None | | | |
| CN | 109165786 | A | 08 January 2019 | WO | 2020042716 | A1 | 05 March 2020 |
| CN | 111768035 | A | 13 October 2020 | None | | | |
| US | 2018094943 | A1 | 05 April 2018 | US | 2020217682 | A1 | 09 July 2020 |
| | | | | US | 10663311 | B2 | 26 May 2020 |

Form PCT/ISA/210 (patent family annex) (January 2015)